# FASCICULE DE BREVET EUROPEEN

(11) **EP 2 672 332 B1**
(45) Date de publication et mention de la délivrance du brevet: **13.11.2019**
(21) Numéro de dépôt: 12171071.9
(22) Date de dépôt: 06.06.2012
(51) Int. Cl.: G04B 19/28

(54) **Système de lunette tournante amelioré**
Verbessertes System eines drehbaren Außenrings (einer Uhr)
Improved rotating bezel system

(43) Date de publication de la demande: 11.12.2013
(73) Titulaire: Omega SA, 2500 Biel/ Bienne 4 (CH)
(72) Inventeur: Silvant, Olivier, 2532 Macolin (CH)
(74) Mandataire: Ravenel, Thierry Gérard Louis

(56) Documents cités:
- EP-A1- 0 403 717
- EP-A1- 1 139 185
- CH-A- 662 922
- CH-A2- 703 400
- CH-B5- 563 030

## Description

La présente invention concerne une pièce d'horlogerie comprenant une carrure fermée par un fond et une glace, ladite pièce d'horlogerie comprenant en outre un système de lunette tournante fixé à ladite carrure.

Le domaine technique de l'invention est le domaine technique de la mécanique fine.

### ARRIERE PLAN TECHNOLOGIQUE

La présente invention concerne une lunette tournante pour pièce d'horlogerie.

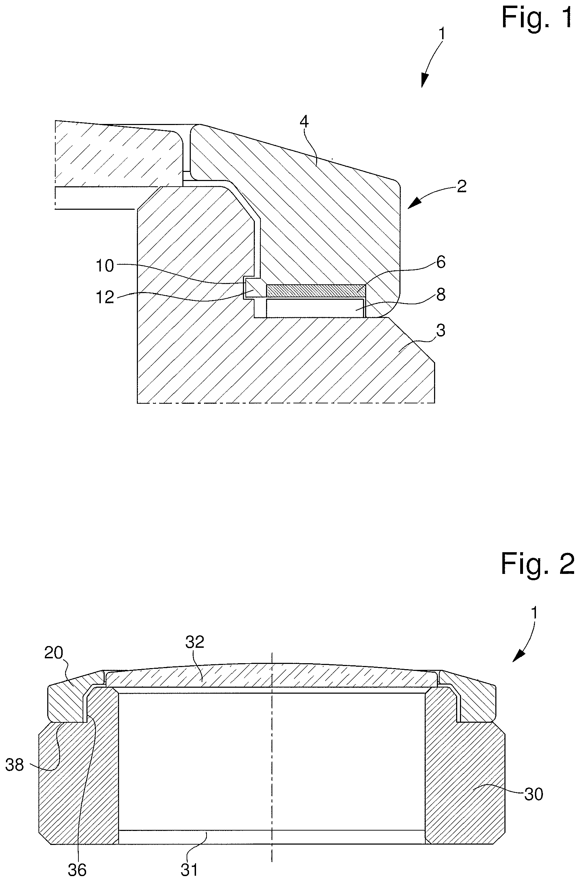

Des systèmes de lunettes tournantes 2 connues, visibles à la figure 1, comprennent une lunette tournante 4 se présentant sous la forme d'une pièce annulaire possédant une face supérieure et une face inférieure, la face supérieure étant la face visible par l'utilisateur. Cette lunette comprend, sur sa surface inférieure, un crantage 6. Le système de lunette tournante comprend en outre un moyen ressort 8. Ce moyen ressort 8 est inséré entre la lunette tournante et la carrure 3 de la pièce d'horlogerie 1 lorsque la lunette 4 est montée à force sur la carrure de la pièce d'horlogerie. Ce moyen ressort 8 se présente sous la forme d'un anneau plat comprenant, sur sa face en regard du crantage de la lunette, des lamelles. Ces lamelles sont disposées pour présenter une inclinaison par rapport au plan de l'anneau plat. Ces lamelles présentent une certaine élasticité de sorte que les moyens ressort agissent sur la lunette tournante pour exercer une force verticale. Cette force verticale tend à pousser la lunette hors de la carrure de la pièce d'horlogerie.

De plus, ces lamelles servent à coopérer avec le crantage de la face inférieure de la lunette. Les lamelles et le crantage sont alors configurés de sorte que la lunette ne puisse tourner que dans un seul sens. Les lamelles s'opposent à la rotation de la lunette si l'utilisateur tente de faire tourner ladite lunette dans le mauvais sens. En général, la lunette et les moyens ressorts sont réalisés en acier qui a l'avantage d'avoir une bonne durée de vie et d'être peu coûteux.

Cette lunette est fixée à la carrure de la boîte de montre par chassage. Pour cela, la carrure présentant un épaulement périphérique dans lequel ledit système de lunette tournante est placé, la paroi verticale dudit épaulement présentant une gorge périphérique 10. La lunette est une pièce annulaire présentant, sur sa face inférieure, un rebord périphérique. Ce rebord est muni d'une saillie 12 continue s'étendant le long dudit rebord vers le centre axial de la lunette. Lorsque ledit système de lunette tournante est monté sur la carrure de la boîte de montre par chassage, la saillie continue s'insère dans la gorge périphérique de l'épaulement assurant un maintien vertical de la lunette sur la carrure.

Un inconvénient de ce système est qu'il nécessite une force importante pour monter ledit système de lunette tournante. En effet, lorsque la lunette est montée à force sur ladite carrure pour que la saillie continue s'insère dans la gorge périphérique, des contraintes importantes sont appliquées sur la lunette. Ces contraintes peuvent, si elles sont mal appliquées, entraîner des déformations de la lunette et donc un mauvais fonctionnement du système de lunette tournante.

Par ailleurs, cette opération de montage de la lunette par enfoncement à force est définitive. Effectivement, il est impossible par la suite de retirer le système de lunette tournante de la carrure. Les tentatives pour retirer ledit système de lunette tournante ont pour conséquence une destruction dudit système.

### RESUME DE L'INVENTION

La présente invention est définie par les revendications annexées.

L'invention a pour but de pallier les inconvénients de l'art antérieur en proposant de fournir un système de lunette tournante de pièce d'horlogerie dont le montage sur la boîte de montre est plus simple, tout en imposant moins de contrainte audit système et qui permet d'être démonter plus facilement.

A cet effet, l'invention concerne une pièce d'horlogerie comprenant, *inter alia,* une carrure fermée par un fond et une glace, ladite carrure comportant un épaulement périphérique dans lequel est agencée une gorge, ladite gorge étant disposée sur une face de l'épaulement parallèle à l'axe central de la carrure, ladite pièce d'horlogerie comprenant un système de lunette tournante monté à rotation sur ledit épaulement périphérique, caractérisée en ce que ledit système de lunette tournante comprend un anneau formant lunette muni d'au moins un premier évidement disposé sur une face de la lunette destinée à venir en regard de ladite gorge lorsque ledit système de lunette tournante est monté sur la carrure, ledit système de lunette tournante comprenant en outre des moyens ressorts s'étendant à la fois dans ledit au moins un premier évidement de la lunette et à la fois dans la gorge de la carrure pour assurer le maintien du système de lunette tournante à la carrure de la pièce d'horlogerie.

Un premier avantage de la présente invention est de permettre au système de lunette tournante selon l'invention d'être plus simple à monter. En effet, le système selon la présente invention se présente sous la forme d'un système pré-monté. On comprend alors que les différents éléments constituant le système de lunette tournante sont assemblés entre eux et qu'il suffit, après cela, de fixer ledit système à la carrure de la boîte de montre. Ainsi, le stockage et le transport des systèmes de lunette tournante sont plus simples car ils sont déjà montés

Un second avantage est que la présente invention permet un montage nécessitant moins de contraintes. Effectivement, comme les moyens ressorts sont les moyens permettant de retenir le système de lunette tournante à la carrure de la boite de montre, la contrainte exercée lors du montage est en partie absorbée. Cette contrainte est absorbée par le ressort qui va se déformer et facilité le montage.

Il est souligné que le second mode de réalisation sous-mentionné est un mode de réalisation compris dans le champ des revendications annexées. Contrairement, les autres modes de réalisation sous-mentionnés ne sont pas des modes de réalisation compris dans le champ des revendications annexées.

Dans un premier mode de réalisation avantageux, les moyens ressorts comprennent un anneau ressort sous la forme d'un anneau ouvert présentant au moins une zone ayant un rayon minimal et une zone ayant un rayon maximal de sorte que la zone ayant un rayon maximal coopère avec ledit au moins un premier évidement et que la zone ayant un rayon minimal coopère avec la gorge de l'épaulement périphérique.

Dans un second mode de réalisation avantageux, le système de lunette tournante comprend en outre un élément denté présentant une denture agencée pour coopérer avec une denture correspondante agencée sur les moyens ressorts pour indexer a la position angulaire de la lunette.

Dans un troisième mode de réalisation avantageux, la lunette comprend un second évidement dans lequel l'élément denté est agencé.

Dans un quatrième mode de réalisation avantageux, ledit anneau ressort est un anneau plat dont la denture est agencée sur la paroi extérieure de ladite au moins une zone ayant un rayon minimal, les premier et second évidements étant alors confondus.

Dans un cinquième mode de réalisation avantageux, ledit anneau ressort comprend deux extrémités dont l'une présente une partie surélevée, ladite partie surélevée comprenant une partie courbe orientée verticalement et une partie plane parallèle audit anneau ressort, ladite partie plane comprenant, sur sa paroi extérieure, la denture coopérant avec l'élément denté.

Dans un autre mode de réalisation avantageux, la lunette est réalisée en au moins deux parties et comprend une bague de lunette et une bague de support présentant toutes les deux un profil complémentaire de sorte que l'assemblage de la bague de lunette à la bague de support permet de former les premier et second évidements confondus.

Dans un autre mode de réalisation avantageux, la lunette est réalisée en au moins deux parties et comprend une bague de lunette et une bague de support présentant toutes les deux un profil complémentaire de sorte que l'assemblage de la bague de lunette à la bague de support permet de former le second évidement, ladite bague de support comprenant le premier évidement.

Dans un autre mode de réalisation avantageux, ledit anneau ressort comprend trois zones ayant un rayon minimal angulairement reparties.

Dans un autre mode de réalisation avantageux, les zones ayant un rayon minimal dudit anneau ressort sont angulairement reparties.

Dans un autre mode de réalisation avantageux, ladite denture est agencée sur chaque zone ayant un rayon maximal.

### BREVE DESCRIPTION DES FIGURES

Les buts, avantages et caractéristiques du système de lunette selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement un système de lunette selon l'art antérieur ;
- La figure 2 représente une coupe d'une pièce d'horlogerie équipée d'un système de lunette ;
- La figure 3 représente schématiquement le système de lunette selon l'invention ;
- La figure 4 représente schématiquement un premier mode de réalisation du système de lunette selon l'invention ;
- Les figure 5 et 6 représentent schématiquement le ressort du premier mode de réalisation du système de lunette selon l'invention ;
- La figure 7 représente schématiquement une variante du premier mode de réalisation du système de lunette selon l'invention ; et
- La figure 8 représente schématiquement un second mode de réalisation du système de lunette selon l'invention.

### DESCRIPTION DETAILLEE

La présente invention procède de l'idée générale inventive qui consiste à procurer un système de lunette tournante étant plus simple à monter.

Une pièce d'horlogerie 1 visible à la figure 2 comprend une carrure 30 fermée par un fond 31 et une glace 32. Cette carrure 30 comprend un épaulement périphérique 34 défini par une paroi latérale 36 et une base 38. Cet épaulement 34 défini un emplacement dans lequel le système de lunette tournante 20 est placé.

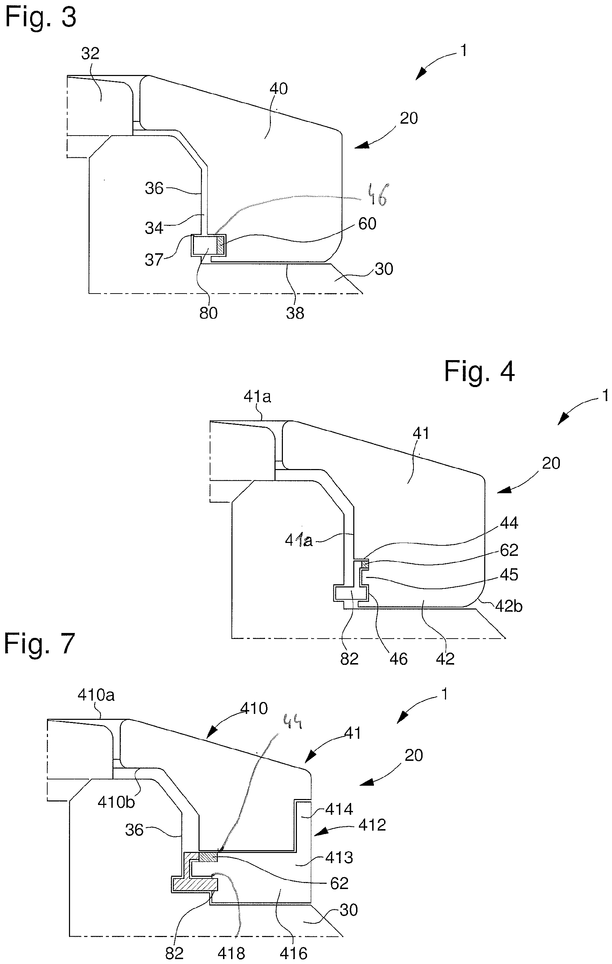

Le système de lunette tournante 20, visible à la figure 3, comprend une lunette 40 qui est la partie visible et manipulée par l'utilisateur. Le système de lunette tournante 20 comprend également un élément denté 60 agencés au niveau de la lunette 40 et des moyens ressorts 80 coopérant avec l'élément denté 60 pour permettre la rotation du système de lunette tournante 20 par rapport à la carrure 30 de la pièce d'horlogerie 1.

Avantageusement selon l'invention, les moyens ressorts 80 sont également utilisés pour maintenir le système de lunette tournante 20 à la carrure 30 de la boîte de montre 1.

Dans un premier mode de réalisation visible à la figure 4, les moyens ressorts 80 se présentent sous la forme d'un ressort à plusieurs niveaux, en trois dimensions.

Le système de lunette tournante 20 de ce mode de réalisation comprend une lunette 41. Cette lunette 41 se présente par exemple sous la forme d'un anneau comprenant une face supérieure 41a et une face inférieure 41b. Depuis cette face inférieure 41b, un rebord périphérique 42 s'étend perpendiculairement par rapport au plan de la lunette 41. Ce rebord périphérique 42 comprend une paroi latérale intérieure 42a et une paroi latérale extérieure 42b. La paroi latérale intérieure 42a comprend un second évidement 44 ayant un profil parallélépipédique tel qu'un profil carré ou rectangulaire. Ce second évidement 44 parcourt l'intégralité de la longueur dudit rebord 42 de sorte à être circulaire. Dans ce second évidement 44 est agencé l'élément denté 60. Cet élément denté 60 peut se présenter sous la forme d'une denture 61 réalisée directement dans ledit premier évidement du rebord ou, comme dans l'exemple illustré, sous la forme d'un anneau denté 62 portant, sur sa face intérieure, une denture 63. Cet anneau denté 62 est placé dans ledit second évidement 44. Des moyens permettant de solidariser angulairement ledit anneau denté 62 à la lunette 41 sont prévus, comme par exemple des points de soudure ou de colle. Néanmoins, il peut être prévu que la denture 63 formant l'élément denté 60 peut être réalisée directement sur la paroi latérale intérieure 42a du rebord périphérique 42, ce dernier ne comprenant pas de second évidement 44.

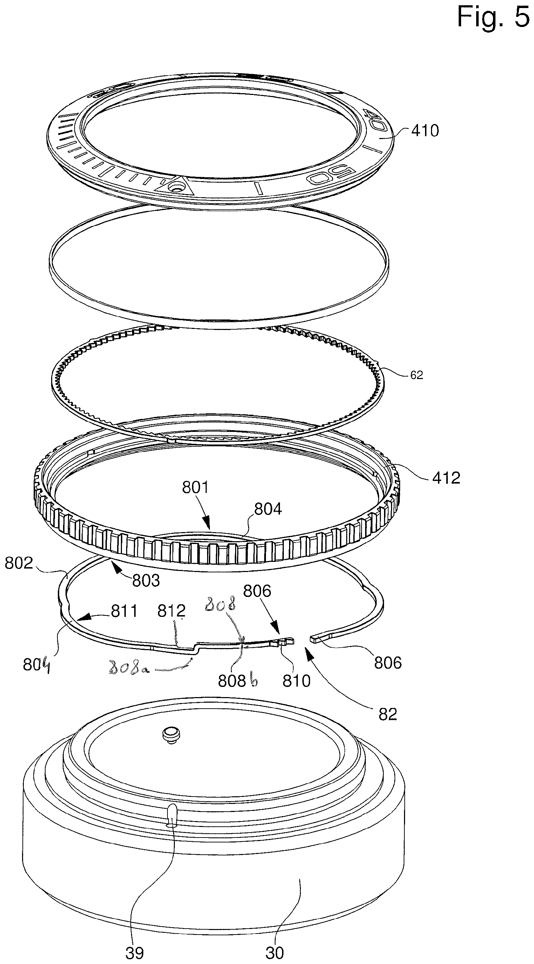

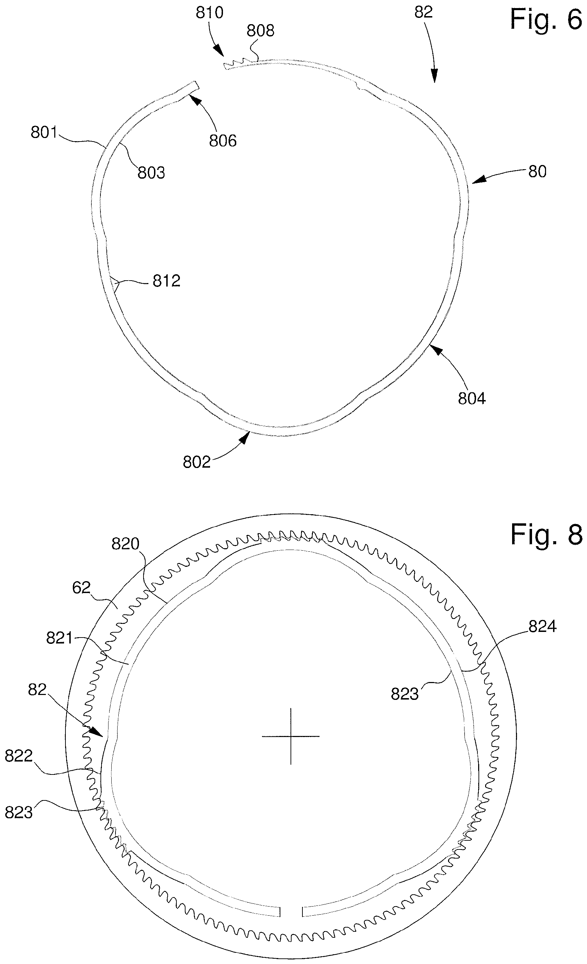

Les moyens ressorts 80, visible aux figures 5 et 6, se présentent sous la forme d'un anneau ressort 82. Cet anneau ressort présente une face supérieure et une face inférieure, ladite face supérieure étant la face visible depuis une vue de haut lorsque ledit anneau ressort est posé sur un plan quelconque. Ce dernier comprend un anneau 800 ouvert comprenant au moins une zone présentant un rayon de courbure plus petit que le rayon de courbure dudit anneau non fermé. On comprend alors que ledit anneau ressort comprend au moins une zone 802 présentant un rayon maximal et au moins une zone 804 présentant un rayon minimal. Dans le cas représenté à la figure 5, l'anneau ressort comprend trois zones 802 présentant un rayon maximal espacées angulairement de façon régulière. Ledit anneau ouvert 800 présente également, à une de ses extrémités 806, une surélévation 808. On entend par là que ladite extrémité présente une courbure axiale ou verticale de sorte que cette extrémité soit surélevée et parallèle au plan de l'anneau ressort 800. La partie surélevée comprend alors une partie courbe 808a orientée axialement et une partie plane 808b parallèle audit anneau ressort 82. Préférentiellement, cette courbure s'étend depuis la face supérieur de l'anneau ressort 82. Cette partie surélevée 808 comprend, sur sa face externe, une denture 810. Cette denture 810 est complémentaire de la denture de l'élément denté 60 c'est-à-dire la denture 63 de l'anneau denté 62 ou de la denture 61. En effet, lorsque l'anneau ressort 82 est monté dans le système de lunette tournante 20, la surélévation de l'anneau ressort 82 est calculée telle que cette dernière se trouve en regard de l'anneau denté 62.

Pour monter l'anneau ressort 82 dans la lunette 41, cette dernière comprend un évidement pour ressort 46 ayant un profil carré ou rectangulaire parcourant également l'intégralité de la longueur dudit rebord 42. Ce premier évidement 46 est situé en dessous du second évidement 44 de sorte d'une paroi séparatrice 48 sépare le second évidement 44 du premier évidement 46. La paroi séparatrice 48 est, de préférence, raccourcie de sorte que le second évidement 44 et le premier évidement 46 communique l'un avec l'autre de sorte à former un logement 45 pour l'anneau ressort 82. De ce fait, lors du montage de l'anneau ressort 82, la denture 810 de la face externe de la partie surélevée 808 vient en contact de la denture de la face interne de l'anneau denté 62, l'anneau ressort 82 vient s'encastrer dans ladite lunette 41. Les au moins une zone 804 présentant un rayon minimal sont insérées dans le premier évidement 46. En conséquence, lorsque l'anneau denté 62 et l'anneau ressort 82 sont montés dans la lunette 41, seules les au moins une zone 802 présentant un rayon maximal font saillie.

La coopération entre la denture 63 de l'anneau denté 62 et la denture 810 de la partie surélevée 808 de l'anneau ressort 82 permet de déterminer le sens de rotation du système de lunette tournante 20. Pour cela, la denture 810 de la face externe de la partie surélevée 808 et la denture de la face interne de l'anneau denté 62 sont configurées pour que chaque dent comprenne une face inclinée et une face droite ou confondue avec le rayon de l'anneau denté 62 ou de l'anneau ressort 82. Lorsque l'anneau ressort 82 est monté dans le système de lunette tournante 20, la face inclinée de chaque dent de la denture 810 de l'anneau ressort 82 est en contact avec la face inclinée de chaque dent de la denture 63 de l'anneau denté 62. La rotation du système est unidirectionnelle c'est-à-dire que la rotation peut se faire dans le sens horaire ou le sens anti-horaire mais il est possible que la rotation soit bidirectionnelle. En effet, si le système de lunette tournante 20 est tourné dans le bon sens, les faces inclinés de la denture de l'anneau ressort 82 et de la denture de l'anneau denté 62 glissent les unes sur les autres pour s'engrener. Par contre, si le système de lunette tournante 20 est tourné dans le mauvais sens, les faces droites de l'anneau denté 62 prennent appui sur les faces droites de l'anneau ressort 82 opérant une blocage.

La paroi latérale 36 de l'épaulement 34 de la carrure 30 comprend une gorge 37 s'étendant le long de la paroi latérale 36 de sorte à faire le tour de l'épaulement 34. Cette gorge 37 est utilisée pour fixer ledit système de lunette tournante 20. En effet, lors du montage du système de lunette tournante 20 sur la carrure 30 de la montre, le chassage dudit système de lunette tournante 20 entraîne l'application d'une contrainte de tension sur l'anneau ressort 82. Cette contrainte a pour conséquence que l'anneau ressort 82 se tend et voit son diamètre augmenter, ce dernier ayant tendance à entrer entièrement dans le premier évidement 46 facilitant ainsi le chassage.

Lorsque l'anneau ressort 82 se trouve en regard de la gorge 37 située sur la carrure 30, la contrainte exercée sur ledit anneau ressort 82 diminue. Ce dernier se détend pour reprendre sa position initiale. Les zones de l'anneau ressort présentant un rayon maximal 802, en se détendant, s'insère dans la gorge 37 de la carrure 30 pour permettre un maintien vertical.

On obtient alors un système de lunette tournante 20 dans lequel les zones de l'anneau ressort 82 présentant un rayon maximal 802 sont insérées dans la gorge 37 de la carrure 30 et laquelle les zones présentant un rayon minimal 804 sont insérées dans le premier évidement 46

Par ailleurs, l'anneau ressort 82 présente sur sa face interne 803, au moins une saillie 812. Cette saillie 812 est réalisée pour coopérer avec un trou 39 situé sur la carrure 30 comme visible à la figure 5. Ce trou 39 est placé de sorte que la saillie 812 s'insère dans celui-ci lorsque le système de lunette tournante 20 est monté sur la carrure 30. Cette coopération induit un verrouillage angulaire de l'anneau ressort 82 par rapport à la carrure 30.

On obtient alors un anneau ressort 82 angulairement solidaire de la carrure 30 et une lunette 41 qui comprend l'élément denté 60 qui peut tourner autour de la carrure 30 dans au moins un sens prédéterminé. Effectivement, lorsque l'utilisateur décide de tourner le système de lunette tournante 20, il a deux possibilités : soit il tourne le système de lunette tournante 20 dans le sens dans lequel il est prévu qu'il tourne, soit dans le sens inverse. Suivant le sens dans lequel l'utilisateur tourne, les dents de l'anneau ressort 82 et les dents de l'anneau denté 62 glissent l'une sur l'autre pour s'engrainer ou appuient l'une sur l'autre pour bloquer la rotation.

Un avantage du système de lunette tournante 20 selon l'invention est que son montage sur la carrure 30 est facilité car la contrainte à exercer est plus faible. En effet, dans les systèmes connus, le maintien vertical est réalisé par chassage d'un élément rigide ce qui impose d'exercer une force importante pour chasser le système de lunette tournante 20. Cela entraîne par ailleurs que l'opération de désolidarisation du système de lunette tournante 20 de la carrure 30 est très compliquée car le risque de briser ledit système est important. Avec le système de lunette tournante 20 selon l'invention utilisant un élément élastique pour assurer le maintien vertical, c'est l'anneau ressort 82 qui est utilisé pour le maintien vertical et qui se déforme lors de l'opération de chassage. La contrainte devant être appliquée pour assembler le système de lunette tournante 20 selon l'invention à la carrure 30 est donc moins importante. La conséquence est que l'opération de désolidarisation du système de lunette tournante 20 de la carrure 30 est moins compliquée. Une autre conséquence est une diminution du risque de casser ledit système de lunette tournante 20.

Dans une variante du second mode de réalisation visible à la figure 7, la lunette 41 est composée de plusieurs parties. Cette lunette 41 comprend une bague de lunette 410 et un élément de support 412 s'assemblant ensemble. La bague de lunette 410 consiste en un anneau comprenant une face supérieure 410a et une face inférieur 410b. L'élément de support 412 se présente sous la forme d'une bague de support 413 ayant une face supérieure et une face inférieure. La face supérieure comprend un rebord supérieur périphérique 414 ayant un profil à escalier. On comprend ainsi que ledit rebord présente plusieurs niveaux ou surface d'appui. Au minimum, le rebord supérieur périphérique 414 comprendra au moins un niveau intermédiaire, l'élément de support 412 comprend ainsi trois surfaces d'appui à trois hauteurs différentes. La face inférieure comprend un rebord inférieur périphérique 416 s'étendant perpendiculairement par rapport au plan de l'élément de support 412. Ce dernier comprend un premier évidement 418 parcourant la surface intérieure du second rebord 416 de sorte à former un évidement circulaire. La bague de lunette 410 présente également un profil en forme d'escalier mais complémentaire. Ce profil en forme d'escalier complémentaire est réalisé pour coopérer avec le profil en escalier de l'élément de support 412. Ainsi, lors du montage de la lunette, l'anneau denté 62 est placé sur une des surfaces d'appui de l'anneau de support 412, de préférence, la surface la plus basse. Puis, la bague de lunette 410 est assemblée à la bague de support 413 par chassage ou vissage ou tout autre moyen de fixation. Les profils en escalier de la bague de lunette 410 et de la bague de support 413 coopèrent ensembles. De préférence, les profils en escalier sont agencés de sorte à former le second évidement44 dans lequel l'anneau denté 62 est placé. L'anneau denté 62 est pris entre la bague de lunette 410 et la bague de support 413. L'anneau ressort 82 est fixé à la lunette 41 de sorte que les zones présentant un rayon maximal 802 s'insèrent dans le premier évidement 418 du rebord inférieur 416. La conséquence est que, dans ce cas, la partie surélevée 808 de l'anneau ressort 82, et plus particulièrement la denture 810 de cette partie surélevée, coopère avec la denture de l'anneau denté 62.

Dans un second mode de réalisation visible à la figure 8, l'anneau ressort 82 ne comprend pas de surélévation. Ledit anneau ressort 82 est un anneau ouvert ou non fermé 820 comprenant au moins une zone présentant un rayon maximal 822 et au moins une zone présentant un rayon minimal 821. Dans le cas représenté à la figure 8, l'anneau ressort comprend trois zones présentant un rayon maximal 822, espacées angulairement de façon régulière. Ce second mode de réalisation se distingue en ce que la denture 823 coopérant avec la denture de l'élément denté 62 est placée sur ladite au moins une zone présentant un rayon maximal 822. Cet agencement permet de simplifier la lunette puisqu'un seul évidement doit être agencé sur la paroi intérieure de la lunette ou de l'élément de support comme visible à la figure 3.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Pièce d'horlogerie comprenant une carrure (30) fermée par un fond et une glace, ladite carrure (30) comportant un épaulement périphérique (34) dans lequel est agencée une gorge (37), ladite gorge étant disposée sur une face de l'épaulement parallèle à l'axe central de la carrure (C), ladite pièce d'horlogerie comprenant un système de lunette tournante (20) monté à rotation sur ledit épaulement périphérique, **caractérisée en ce que** ledit système de lunette tournante comprend un anneau formant lunette (40, 41) muni d'au moins un premier évidement (46, 418) disposé sur une face de la lunette destinée à venir en regard de ladite gorge lorsque ledit système de lunette tournante (20) est monté sur la carrure, ledit système de lunette tournante (20) comprenant en outre des moyens ressorts (80) s'étendant à la fois dans ledit au moins un premier évidement (46) de la lunette et à la fois dans la gorge (37) de la carrure pour assurer le maintien du système de lunette tournante (20) à la carrure (30) de la pièce d'horlogerie, **caractérisé en ce que** ledit système de lunette tournante (20) comprend en outre un élément denté (60) présentant une denture (61, 63) agencée pour coopérer avec une denture correspondante (810, 823) agencée sur les moyens ressorts (80) pour indexer à la position angulaire de la lunette.

2. Pièce d'horlogerie selon la revendication 1, **caractérisée en ce que** les moyens ressorts (80) comprennent un anneau ressort (82) sous la forme d'un anneau ouvert (800) présentant au moins une zone ayant un rayon minimal (804) et une zone ayant un rayon maximal (802) de sorte que la zone ayant un rayon maximal (802) coopère avec ledit au moins un premier évidement (46) et que la zone ayant un rayon minimal (804) coopère avec la gorge (37) de l'épaulement périphérique (34).

3. Pièce d'horlogerie selon la revendication 1, **caractérisée en ce que** la lunette comprend un second évidement (44) dans lequel l'élément denté (60) est agencé.

4. Pièce d'horlogerie selon la revendication 2, **caractérisée en ce que** ledit anneau ressort (82) est un anneau (800) plat dont la denture (823) est agencée sur la paroi extérieure (801) de ladite au moins une zone ayant un rayon minimal (804), les premier et second évidements étant alors confondus.

5. Pièce d'horlogerie selon la revendication 2, **caractérisée en ce que** ledit anneau ressort (82) comprend deux extrémités (806) dont l'une présente une partie surélevée (808), ladite partie surélevée (808) comprenant une partie courbe (808a) orientée verticalement et une partie plane (808b) parallèle audit anneau ressort (82), ladite partie plane comprenant, sur sa paroi extérieure, la denture (810) coopérant avec l'élément denté (60).

6. Pièce d'horlogerie selon la revendication 4, **caractérisée en ce que** la lunette (41) est réalisée en au moins deux parties et comprend une bague de lunette (410) et une bague de support (412) présentant toutes les deux un profil complémentaire de sorte que l'assemblage de la bague de lunette à la bague de support permet de former les premier et second évidements confondus (44).

7. Pièce d'horlogerie selon la revendication 5, **caractérisée en ce que** la lunette (41) est réalisée en au moins deux parties et comprend une bague de lunette (410) et une bague de support (412) présentant toutes les deux un profil complémentaire de sorte que l'assemblage de la bague de lunette à la bague de support permet de former le second évidement (44), ladite bague de support comprenant le premier évidement (418).

8. Pièce d'horlogerie selon l'une des revendications 2 à 7, **caractérisée en ce que** ledit anneau ressort (82) comprend trois zones ayant un rayon minimal (804) angulairement reparties.

9. Pièce d'horlogerie selon la revendication 8, **caractérisée en ce que** les zones ayant un rayon minimal (804) dudit anneau ressort (82) sont angulairement reparties.

10. Pièce d'horlogerie selon la revendication 4, **caractérisée en ce que** ladite denture est agencée sur chaque zone ayant un rayon maximal.

## Patentansprüche

1. Uhr, umfassend einen Gehäusemittelteil (30), der durch einen Boden und ein Glas verschlossen ist, wobei der Gehäusemittelteil (30) eine Umfangsschulter (34) aufweist, in der eine Nut (37) angeordnet ist, wobei die Nut auf einer zu der Mittelachse des Gehäusemittelteils (C) parallelen Schulterfläche angeordnet ist, und die Uhr eine Einrichtung (20) mit drehbarer Lünette aufweist, die an der Umfangsschulter drehbar montiert ist, **dadurch gekennzeichnet, dass** die Einrichtung mit drehbarer Lünette einen die Lünette bildenden Ring (40, 41) aufweist, der mit mindestens einer ersten Ausnehmung (46, 418) versehen ist, die auf einer Seite der Lünette angeordnet ist, die dazu bestimmt ist, zur Nut ausgerichtet zu sein, wenn die Einrichtung (20) mit drehbarer Lünette an dem Gehäusemittelteil montiert ist, wobei die Einrichtung (20) mit drehbarer Lünette ferner Federmittel (80) aufweist, die sich sowohl in der mindestens einen ersten Ausnehmung (46) der Lünette als auch in der Nut (37) des Gehäusemittelteils erstrecken, um den Halt der Einrichtung (20) mit drehbarer Lünette an dem Gehäusemittelteil (30) der Uhr sicherzustellen, **dadurch gekennzeichnet, dass** die Einrichtung (20) mit drehbarer Lünette ferner ein gezahntes Element (60) aufweist, das eine Zahnung (61, 63) aufweist, die dafür ausgelegt ist, mit einer entsprechenden Zahnung (810, 823) zusammenzuwirken, die an den Federmitteln (80) angeordnet ist, um die Winkellage der Lünette zu indexieren.

2. Uhr nach Anspruch 1, **dadurch gekennzeichnet, dass** die Federmittel (80) einen Federring (82) in Form eines offenen Rings (800) aufweisen, der mindestens einen Bereich (804) mit einem minimalen Radius und einen Bereich (802) mit einem maximalen Radius aufweist, derart, dass der Bereich (802) mit maximalem Radius mit der mindestens einen ersten Ausnehmung (46) zusammenwirkt und dass der Bereich (804) mit minimalem Radius mit der Nut (37) der Umfangsschulter (34) zusammenwirkt.

3. Uhr nach Anspruch 1, **dadurch gekennzeichnet, dass** die Lünette eine zweite Ausnehmung (44) aufweist, in der das gezahnte Element (60) angeordnet ist.

4. Uhr nach Anspruch 2, **dadurch gekennzeichnet, dass** der Federring (82) ein flacher Ring (800) ist, dessen Zahnung (823) an der Außenwand (801) des mindestens einen Bereichs (804) mit minimalem Radius angeordnet ist, wobei dann die erste und die zweite Ausnehmung zusammenfallen.

5. Uhr nach Anspruch 2, **dadurch gekennzeichnet, dass** der Federring (82) zwei Enden (806) aufweist, von denen eines einen erhöhten Abschnitt (808) aufweist, wobei der erhöhte Abschnitt (808) einen gekrümmten Abschnitt (808a), der vertikal ausgerichtet ist, und einen flachen Abschnitt (808b), der zu dem Federring (82) parallel verläuft, umfasst, wobei der flache Abschnitt an seiner Außenwand die Zahnung (810) aufweist, die mit dem gezahnten Element (60) zusammenwirkt.

6. Uhr nach Anspruch 4, **dadurch gekennzeichnet, dass** die Lünette (41) aus mindestens zwei Teilen hergestellt ist und einen Lünettenring (410) und einen Stützring (412) umfasst, die beide ein komplementäres Profil aufweisen, derart, dass die Montage des Lünettenrings an dem Stützring das Ausbilden der zusammenfallenden ersten und zweiten Ausnehmung (44) ermöglicht.

7. Uhr nach Anspruch 5, **dadurch gekennzeichnet, dass** die Lünette (41) aus mindestens zwei Teilen hergestellt ist und einen Lünettenring (410) und einen Stützring (412) umfasst, die beide ein komplementäres Profil aufweisen, derart, dass die Montage des Lünettenrings an dem Stützring das Ausbilden der zweiten Ausnehmung (44) ermöglicht, wobei der Stützring die erste Ausnehmung (418) aufweist.

8. Uhr nach einem der Ansprüche 2 bis 7, **dadurch gekennzeichnet, dass** der Federring (82) drei winkelmäßig verteilte Bereiche (804) mit minimalem Radius aufweist.

9. Uhr nach Anspruch 8, **dadurch gekennzeichnet, dass** die Bereiche (804) mit minimalem Radius des Federrings (82) winkelmäßig verteilt sind.

10. Uhr nach Anspruch 4, **dadurch gekennzeichnet, dass** die Zahnung in jedem Bereich mit maximalem Radius angeordnet ist.

## Claims

1. Timepiece comprising a middle part (30) closed by a back cover and a crystal, said middle part (30) comprising a peripheral shoulder (34) in which a groove (37) is arranged, said groove being disposed on a shoulder surface parallel to the central axis of the middle part (C), said timepiece comprising a rotating bezel system (20) rotatably mounted on said peripheral shoulder, **characterized in that** said rotating bezel system includes a bezel ring (40, 41) provided with at least a first recess (46, 418) disposed on a surface of the bezel intended to face said groove when said rotating bezel system (20) is assembled on the middle part, said rotating bezel system (20) further comprising a spring means (80) extending both into said at least one first recess (46) of the bezel and into the groove (37) of the middle part to hold the rotating bezel system (20) on the middle part (30) of the timepiece, and a toothed element (60) having a toothing (61, 63) arranged to cooperate with a corresponding toothing (810, 823) arranged on the spring means (80) so as to index the angular position of the bezel.

2. Timepiece according to claim 1, **characterized in that** the spring means (80) includes a spring ring (82) in the form of an open ring (800) having at least one zone having a minimum radius (804) and one zone having a maximum radius (802) so that the zone having a maximum radius (802) cooperates with said at least one first recess (46) and so that the zone having a minimum radius (804) cooperates with the groove (37) of the peripheral shoulder (34).

3. Timepiece according to claim 1, **characterized in that** the bezel comprises a second recess (44) in which the toothed element (60) is arranged.

4. Timepiece according to claim 2, **characterized in that** said spring ring (82) is a flat ring (800) whose toothing (823) is arranged on the external wall (801) of said at least one zone having a minimum radius (804), the first and second recesses then being merged.

5. Timepiece according to claim 2, **characterized in that** said spring ring (82) comprises two ends (806) one of which has a raised part (808), said raised part (808) including a vertically oriented curved portion (808a) and a flat portion (808b) parallel to said spring ring (82), said flat portion comprising, on the external wall thereof, the toothing (810) cooperating with the toothed element (60).

6. Timepiece according to claim 4, **characterized in that** the bezel (41) is made in at least two parts and includes a bezel ring (410) and a support ring (412) having complementary profiles so that assembling the bezel ring to the support ring merges the first and second recesses (44).

7. Timepiece according to claim 5, **characterized in that** the bezel (41) is made in at least two part and includes a bezel ring (410) and a support ring (412) having complementary profiles so that assembling the bezel ring to the support ring forms the second recess (44), said support ring comprising the first recess (418).

8. Timepiece according to any of claims 2 to 7, **characterized in that** said spring ring (82) comprises three, angularly distributed zones having a minimum radius (804).

9. Timepiece according to claim 8, **characterized in that** the zones having a minimum radius (804) of said spring ring (82) are angularly distributed.

10. Timepiece according to claim 4, **characterized in that** said toothing is arranged on each zone having a maximum radius.
